(19) Europäisches Patentamt
European Patent Office
Office européen des brevets

(11) EP 2 368 866 A1

(12) **EUROPEAN PATENT APPLICATION**
published in accordance with Art. 153(4) EPC

(43) Date of publication:
28.09.2011 Bulletin 2011/39

(51) Int Cl.:
*C04B 35/46* (2006.01)  *B01D 39/20* (2006.01)

(21) Application number: 09831962.7

(22) Date of filing: 11.12.2009

(86) International application number:
PCT/JP2009/070740

(87) International publication number:
WO 2010/067859 (17.06.2010 Gazette 2010/24)

(84) Designated Contracting States:
AT BE BG CH CY CZ DE DK EE ES FI FR GB GR HR HU IE IS IT LI LT LU LV MC MK MT NL NO PL PT RO SE SI SK SM TR

(30) Priority: 11.12.2008 JP 2008315945

(71) Applicant: Sumitomo Chemical Company, Limited
Tokyo 104-8260 (JP)

(72) Inventors:
• UOE, Kousuke
Niihama-shi
Ehime 792-0025 (JP)

• SUZUKI, Keiichiro
Niihama-shi
Ehime 792-0871 (JP)
• KAN, Masahiro
Niihama-shi
Ehime 792-0865 (JP)
• YOSHINO, Hajime
Niihama-shi
Ehime 792-0009 (JP)

(74) Representative: Vossius & Partner
Siebertstrasse 4
81675 München (DE)

(54) **PROCESS FOR PRODUCING ALUMINUM TITANATE-BASED FIRED PRODUCT**

(57) The invention is to provide a process for producing a fired body comprising an aluminum titanate-based ceramic of which the shrinkage ratio in firing (firing shrinkage ratio) can be suppressed low and which is excellent in thermal decomposition resistance. The invention is a process for producing an aluminum titanate-based fired body comprising a step of firing a shaped body of a starting material mixture containing an aluminum source powder, a titanium source powder and a magnesium source powder, wherein the titanium source powder has a specific particle diameter distribution characteristic. In the starting material mixture, the ratio of the $Al_2O_3$-equivalent molar amount of the aluminum source powder to the $TiO_2$-equivalent molar ratio of the titanium source powder is preferably within a range of from 35 : 65 to 45 : 55, and the ratio of the MgO-equivalent molar amount of the magnesium source powder to the total of the $Al_2O_3$-equivalent molar amount of the aluminum source powder and the $TiO_2$-equivalent molar ratio of the titanium source powder is preferably within a range of from 0.03 to 0.15.

Fig. 1

EP 2 368 866 A1

**Description**

Technical Field

The present invention relates to a process for producing a fired body of an aluminum titanate-based ceramic, and particularly relates to a process for producing a fired body of an aluminum magnesium titanate-based ceramic by firing a shaped body of a starting material mixture containing an aluminum source powder, a titanium source powder and a magnesium source powder.

Background Art

Aluminum titanate-based ceramics are ceramics containing titanium and aluminum as the constitutive elements and showing a crystal pattern of aluminum titanate in X-ray diffraction spectrum, and are known as ceramics which is excellent in heat resistance. Aluminum titanate-based ceramics are conventionally used for firing tools such as crucibles. Recently, the industrial applicability of aluminum titanate-based ceramics is increasing as a material of constituting a ceramic filter for collecting fine carbon particles in exhaust gas discharged from internal combustion engines such as diesel engines.

As a process for producing aluminum titanate-based ceramics, known is a process of firing a starting material mixture containing a powder of a titanium source compound such as titania and a powder of an aluminum source compound such as alumina (Patent Reference 1).

However, when aluminum titanate is produced by firing a starting material powder containing an aluminum source powder and a titanium source powder or by firing a shaped body of the starting material powder, the process has a problem that significant shrinkage occurs in firing, or that is, a firing shrinkage ratio of the shaped body of the starting material powder is high. When the firing shrinkage ratio is high, crack tends to occur in firing the shaped body of the starting material.

To solve the problem, Patent Reference 2 discloses a process for producing a honeycomb structure of an aluminum titanate-based ceramic by shaping a starting material mixture containing a $TiO_2$ powder and an $Al_2O_3$ powder each having a specific particle diameter distribution characteristic, and firing a shaped body.

Prior Art References

Patent References

    [Patent Reference 1] WO05/105704
    [Patent Reference 2] WO08/078747

Disclosure of the Invention

Problems that the Invention is to Solve

Aluminum titanate has a high melting point of 1860°C, and, as mentioned above, aluminum titanate is excellent in heat resistance, but at the same time, generally gradually decomposes into alumina ($Al_2O_3$) and titania ($TiO_2$) at a temperature around between 800 and 1200°C. Accordingly, it is desired to enhance the thermal decomposition resistance of aluminum titanate.

Accordingly, an object of the invention is to provide a process for producing a fired body comprising an aluminum titanate-based ceramic of which a ratio of shrinkage in firing (firing shrinkage ratio) can be kept low and which is excellent in thermal decomposition resistance.

[Means for Solving the Problems]

The invention provides a process for producing an aluminum titanate-based fired body, comprising a step of firing a shaped body made of a starting material mixture containing an aluminum source powder, a titanium source powder, and a magnesium source powder, wherein the titanium source powder has a volume-based particle diameter distribution which is measured by a laser diffraction method and which satisfies the following formulas (1) and (2):

$$(V_{0.5-3} + V_{15-75})/V_{total} \geq 0.7 \qquad (1)$$

$$1/2 \leq V_{15-75}/V_{0.5-3} \leq 3/2 \qquad (2)$$

wherein $V_{0.5-3}$ is a cumulative frequency of particles having a particle diameter of from 0.5 $\mu$m to 3 $\mu$m, $V_{15-75}$ is a cumulative frequency of particles having a particle diameter of from 15 $\mu$m to 75 $\mu$m, and $V_{total}$ is a cumulative frequency of particles having a particle diameter of 0.1 $\mu$m or greater.

In the starting material mixture a ratio of an $Al_2O_3$-equivalent molar amount of the aluminum source powder to a $TiO_2$-equivalent molar amount of the titanium source powder is preferably from 35 : 65 to 45 : 55, and a ratio of a MgO-equivalent molar amount of the magnesium source powder to a total of an $Al_2O_3$-equivalent molar amount of the aluminum source powder and a $TiO_2$-equivalent molar amount of the titanium source powder is preferably from 0.03 to 0.15.

The molar amount of the aluminum source powder means an $Al_2O_3$ (alumina) -equivalent molar amount, and is calculated by the following formula (A):

$$(\text{Molar amount of the aluminum source powder}) = (w_1 \times M_1) / (N_1 \times 2) \qquad (A)$$

In formula (A), $w_1$, represents an amount (g) of the aluminum source powder to be used; $M_1$ represents the molar amount of aluminum in 1 mol of the aluminum source powder; $N_1$ represents the formula weight of the aluminum source powder. When two or more types of aluminum source powders are used, the molar amount of each aluminum source powder is calculated by the formula (A), and then each molar amount are summed up to give the molar amount of the aluminum source powders to be used (the same shall apply hereinafter in molar amount calculatlon).

The molar amount of the titanium source powder means a $TiO_2$ (titania)-equivalent molar amount, and is calculated by the following formula (B):

$$(\text{Molar amount of the titanium source powder}) = (w_2 \times M_2) / N_2 \qquad (B)$$

In formula (B), $w_2$ represents an amount (g) of the titanium source powder to be used; $M_2$ represents the molar amount of titanium in 1 mol of the titanium source powder; $N_2$ represents the formula weight of the titanium source powder. When two or more types of titanium source powders are used, the molar amount of each titanium source powder is calculated by the formula (B), and then each molar amount are summed up to give the molar amount of the titanium source powders to be used (the same shall apply hereinafter in molar amount calculation).

The molar amount of the magnesium source powder means a MgO (magnesia)-equivalent molar amount, and is calculated by the following formula (C):

$$(\text{Molar amount of the magnesium source powder}) = (w_3 \times M_3) / N_3 \qquad (C)$$

In formula (C), $w_3$ represents an amount (g) of the magnesium source powder to be used; $M_3$ represents the molar amount of magnesium in 1 mol of the magnesium source powder; $N_3$ represents the formula weight of the magnesium source powder. When two or more types of magnesium source powders are used, the molar amount of each magnesium source powder is calculated by the formula (C), and then each molar amount are summed up to give the molar amount of the magnesium source powders to be used (the same shall apply hereinafter in molar amount calculation).

Preferably, D50 (a particle diameter corresponding to percentage of 50%) of the aluminum source powder and the magnesium source powder are respectively from 10 $\mu$m to 50$\mu$m and from 0.5 $\mu$m to 30 $\mu$m.

Preferably, the starting material mixture further contains a silicon source powder. The silicon source powder is preferably a powder of a feldspar, a glass frit, or a mixture thereof. A ratio of the $SiO_2$-equivalent molar amount of the silicon power source to a total of an $Al_2O_3$-equivalent molar amount of the aluminum source powder and a $TiO_2$-equivalent molar amount of the titanium source powder is preferably from about 0.0011 to 0.123. D50 of the silicon source powder is preferably from 0.5 $\mu$m to 30 $\mu$m.

A $SiO_2$-equivalent amount of the silicon source powder is calculated by the following formula (D):

$$\text{(Molar amount of the silicon source powder)} = (w_4 \times M_4) / N_4 \quad \text{(D)}$$

In formula (D), $w_4$ represents an amount (g) of the silicon source powder to be used; $M_4$ represents the molar amount of silicon in 1 mol of the silicon source powder; $N_4$ represents the formula weight of the silicon source powder. When two or more types of silicon source powders are used, the molar amount of each silicon source powder is calculated by the formula (D), and then each molar amount are summed up to give the molar amount of the silicon source powders to be used (the same shall apply hereinafter in molar amount calculation).

The shape of the shaped body made of the starting material mixture can be a honeycomb shape as an example. A temperature of the firing is, for example, from 1300 °C to 1650 °C, and a time for the firing is, for example, from 10 minutes to 24 hours.

In this description, "D50" means a particle diameter corresponding to a volume-based cumulative percentage of 50% which is measured through laser diffractiometry.

[Advantage of the Invention]

By the process of the invention, the firing shrinkage ratio of the shaped body of a starting material mixture can be kept low, and an aluminum titanate-based fired body which is excellent in thermal decomposition resistance can be produced.

Brief Description of the Drawing

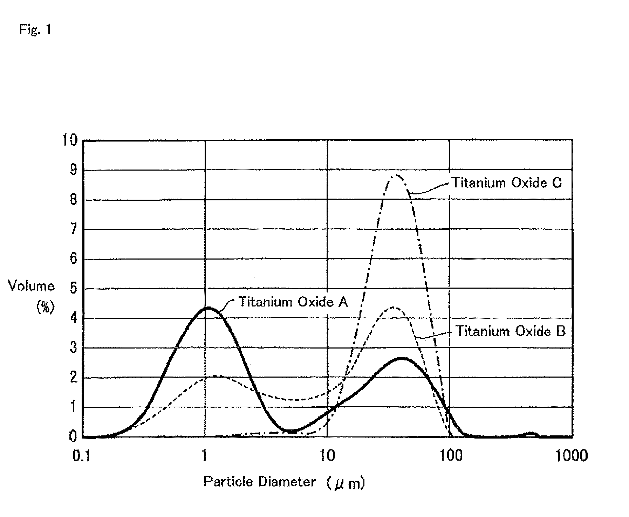

[Fig. 1] Fig. 1 is a graph showing the particle diameter distribution of titanium oxides A to C used in Example and Comparative Examples.

[Mode for Carrying out the Invention]

An aluminum titanate-based fired body obtained by the process of the invention can be produced by firing a shaped body of a starting material mixture containing an aluminum source powder, a titanium source powder and a magnesium source powder. The aluminum titanate-based fired body obtained by using the starting material mixture is a fired body comprising aluminum magnesium titanate crystals.

In the process for producing an aluminum titanate-based fired body of the invention, a titanium source powder having a specific particle diameter distribution characteristic is used. Further, it is desirable that a ratio of the molar amount (molar ratio) of the aluminum source powder, the titanium source powder and the magnesium source powder in the starting material mixture is suitably controlled. By the invention, the firing shrinkage ratio in firing the shaped body of the starting material mixture can be sufficiently kept low, and an aluminum titanate-based fired body which is excellent in thermal decomposition resistance can be produced.

The aluminum source powder contained in the starting material mixture to be used in the invention is a powder of a material that will become an aluminum component constituting the aluminum titanate-based fired body. The aluminum source powder includes, for example a powder of alumina (aluminum oxide). The alumina may be crystalline or amorphous. When the alumina is crystalline, the crystal form thereof includes a $\gamma$-form, a $\delta$-form, a $\theta$-form and an $\alpha$-form. Above all, $\alpha$-form alumina is preferably used.

The aluminum source powder to be used in the invention may be a powder of a material capable of being led to alumina by firing in air. The material includes, for example, aluminum salt, aluminum alkoxide, aluminum hydroxide, and aluminum.

The aluminum salt may be a salt with an inorganic acid (inorganic salt), or a salt with an organic acid (organic salt). The aluminum inorganic salt particularly includes, for example, nitrates, such as aluminum nitrate, and ammonium aluminum nitrate; and carbonates, such as ammonium aluminum carbonate. The aluminum organic salt includes, for example, aluminum oxalate, aluminum acetate, aluminum stearate, aluminum lactate, and aluminum laurate.

The aluminum alkoxide includes, for example, aluminum isopropoxide, aluminum ethoxide, aluminum sec-butoxide, and aluminum tert-butoxide.

The aluminum hydroxide may be crystalline or amorphous. When the aluminum hydroxide is crystalline, the crystal form thereof includes, for example, a gibbsite form, a bayerite form, a norstrandite form, a boehmite form, and a pseudo-boehmite form. The amorphous aluminum hydroxide includes, for example, an aluminum hydrolyzate to be obtained by hydrolysis of an aqueous solution of a water-soluble aluminum compound, such as aluminum salt, and aluminum alkoxide.

Of the above, alumina powder is preferably used as the aluminum source powder, and more preferred is $\alpha$-form alumina powder. The aluminum source powder may contain minor components inevitably contained in the production process.

The particle diameter of the aluminum source powder is not specifically limited, but in general, D50 (50% corresponding particle diameter) thereof is from 10 $\mu$m to 50 $\mu$m. For obtaining an aluminum titanate-based fired body having reduced firing shrinkage and higher thermal decomposition resistance, an aluminum source powder having D50 of from 15 $\mu$m to 40 $\mu$m is preferably used.

The titanium source powder contained in the starting material mixture is a powder of a material that will become a titanium component constituting the aluminum titanate-based ceramic, and the material includes, for example, titanium (IV) oxide, titanium(III) oxide, and titanium(II) oxide, and titanium(IV) oxide is preferably used. The titanium(IV) oxide may be crystalline or amorphous. When the titanium (IV) oxide is crystalline, the crystal form thereof includes an anatase form, a rutile form, and a brookite form. Anatase form and rutile form titanium(IV) oxide are more preferred.

The titanium source powder to be used in the invention may be a powder of a material capable of being led to titania (titanium oxide) by firing in air. The material includes, for example, titanium salt, titanium alkoxide, titanium hydroxide, titanium nitride, titanium sulfide, and titanium.

The titanium salt particularly includes titanium trichloride, titanium tetrachloride, titanium(IV) sulfide, titanium (VI) sulfide, and titanium(IV) sulfate. The titanium alkoxide particularly includes titanium(IV) ethoxide, titanium(IV) methoxide, titanium(IV) tert-butoxide, titanium(IV) isobutoxide, titanium(IV) n-propoxide, titanium(IV) tetraisopropoxide, and their chelate compounds.

Of the above, titanium oxide powder is preferably used as the titanium source powder, and more preferred is titanium(IV) oxide powder. The titanium source powder may contain minor components inevitably contained in the production process.

In the invention, as the titanium source powder, preferably used is a titanium source powder having a volume-based particle diameter distribution which is measured through laser diffractiometry and which satisfies the following formulae (1) and (2):

$$(V_{0.5-3} + V_{15-75})/V_{total} \geq 0.7 \qquad (1)$$

$$1/2 \leq V_{15-75}/V_{0.5-3} \leq 3/2 \qquad (2)$$

In the above formulae (1) and (2), $V_{0.5-3}$ is a cumulative frequency of particles having a particle diameter of from 0.5 $\mu$m to 3 $\mu$m, $V_{15-75}$ is a cumulative frequency of particles having a particle diameter of from 15 $\mu$m to 75 $\mu$m, and $V_{total}$ is a cumulative frequency of particles having a particle diameter of 0.1 $\mu$m or more.

The above formula (1) means that the volume-based ratio of the total amount of the particles having a particle diameter of from 0. 5 to 3 $\mu$m and the particles having a particle diameter of from 15 to 75 $\mu$m to the amount of all the particles (particles having a particle diameter of 0.1 $\mu$m or more) is 0.7 or more. In this manner, when the titanium source powder to be used comprises mainly the particles having a particle diameter of from 0.5 to 3 $\mu$m and the particles having a particle diameter of from 15 to 75 $\mu$m, the firing shrinkage ratio of the shaped body of the starting material mixture can be sufficiently reduced. This is because the packing capability of the starting material powder in the shaped body of the starting material mixture to be fired is enhanced. To attain an enhancement of the packing capability in this manner, just using the titanium source powder having a bimodal particle diameter distribution is not enough, but it is especially preferred that the particle diameter distribution satisfies the above formulae (1) and (2). In the above formula (1), ($V_{0.5-3}$

+ $V_{15-75}$)/$V_{total}$ is preferably 0.8 or more.

The titanium source powder which satisfies the above formula (1) typically includes the titanium source powder having a first peak having a local maximum within a particle diameter range of from 0.5 to 3 $\mu$m, and a second peak having a local maximum within a particle diameter range of from 15 to 75 $\mu$m, in a particle diameter distribution curve determined through laser diffractiometry, the volume-based ratio of the particles constituting these two peaks being 0.7 or more relative to all the particles (particles having a particle diameter of 0.1 $\mu$m or more).

The titanium source powder having the particle diameter distribution like this can be obtained, for example, by mixing a titanium source powder having D50 (50% corresponding particle diameter) of from 0.5 $\mu$m to 3 $\mu$m and a titanium source powder having D50 of from 15 $\mu$m to 75 $\mu$m. The titanium source powder having D50 of from 0.5 $\mu$m to 3 $\mu$m and the titanium source powder having D50 of from 15 $\mu$m to 75 $\mu$m preferably have one peak having a local maximum within a particle diameter range of from 0.5 $\mu$m to 3 $\mu$m, and one peak having a local maximum within a particle diameter range of from 15 $\mu$m to 75 $\mu$m respectively, in a particle diameter distribution curve determined through laser diffractiometry. For obtaining the titanium source powder having the above-mentioned particle diameter distribution, for example, a titanium source powder having D50 (50% corresponding particle diameter) of from 15 $\mu$m to 75 $\mu$m may be pulverized for a predetermined period of time, in addition to the above.

The titanium source powder to be used in the invention may further have other peaks than the above-mentioned first peak and second peak in the particle diameter distribution curve determined through laser diffractiometry, but each titanium source powder preferably has only the above-mentioned first peak and second peak, for more effectively reducing the firing shrinkage ratio. That is, the titanium source powder to be used in the invention preferably has a bimodal particle diameter distribution.

As in the above formula (2), $V_{15-75}/V_{0.5-3}$ is from 1/2 to 3/2, and preferably from 1/2 to 1/1, more preferably from 1/2 to 3/4. When the ratio of the cumulative frequency is less than 1/2 or more than 3/2, the firing shrinkage ratio can not be sufficiently reduced. When the titanium source powder is obtained by mixing a titanium source powder having D50 (50% corresponding particle diameter) of from 15 $\mu$m to 75 $\mu$m and a titanium source powder having D50 of from 0. 5 titanium source powder having D50 of from 0.5 to 3 $\mu$m, the above cumulative frequency $V_{15-75}/V_{0.5-3}$ can be controlled by adjusting the mixing ratio thereof.

When the titanium source powder which satisfies the above formulae (1) and (2) is used, a fired body having a high strength can be obtained. In addition, since a dense fired body can be obtained, the aluminum titanate-based fired body to be obtained may have a smaller coefficient of thermal expansion.

In the invention, the molar ratio of the aluminum source powder to the titanium source powder in the starting material mixture ($Al_2O_3$-equivalent molar amount : $TiO_2$-equivalent molar amount) is preferably from 35 : 65 to 45 : 55, and more preferably from 40 : 60 to 45 : 55. Within the range, when the titanium source powder is used excessively to the aluminum source powder, the thermal decomposition resistance of the fired body can be enhanced, and the firing shrinkage ratio of the shaped body of the starting material mixture can be reduced. In the invention, as mentioned in the above, the molar ratio of the aluminum source powder to the titanium source powder is controlled and the titanium source powder having a specific particle diameter distribution characteristic is used, and accordingly, the firing shrinkage ratio can be significantly reduced.

The magnesium source powder contained in the starting material mixture includes a powder of magnesia (magnesium oxide) and a powder of a material capable of being led to magnesia by firing in air. Examples of the latter include, for example, magnesium salt, magnesium alkoxide, magnesium hydroxide, magnesium nitride, and magnesium.

The magnesium salt particularly includes magnesium chloride, magnesium perchlorate, magnesium phosphate, magnesium pyrophosphate, magnesium oxalate, magnesium nitrate, magnesium carbonate, magnesium acetate, magnesium sulfate, magnesium citrate, magnesium lactate, magnesium stearate, magnesium salicylate, magnesium myristate, magnesium gluconate, magnesium dimethacrylate, and magnesium benzoate.

The magnesium alkoxide particularly includes magnesium methoxide, and magnesium ethoxide. The magnesium source powder may contain minor components inevitably contained in the production process.

As the magnesium source powder, also usable is a powder of a material serving both as a magnesium source and as an aluminum source. The material includes, for example, magnesia spinel ($MgAl_2O_4$). When a powder of a material serving both as a magnesium source and as an aluminum source is used as the magnesium source powder, the molar ratio of the total amount of the $Al_2O_3$ (alumina) -equivalent amount of the aluminum source powder and the $Al_2O_3$ (alumina)-equivalent amount of the Al component in the powder of the material serving both as a magnesium source and as an aluminum source, to the $TiO_2$ (titania)-equivalent amount of the titanium source powder is so controlled as to fall within the above-mentioned range in the starting material mixture.

The particle diameter of the magnesium source powder is not specifically limited, and in general, one having D50 (50% corresponding particle diameter) of from 0.5 $\mu$m to 30 $\mu$m is used. For further reducing a firing shrinkage ratio and obtaining an aluminum titanate-based fired body which is more excellent in thermal decomposition resistance, a magnesium source powder having D50 of from 3 $\mu$m to 20 $\mu$m is preferably used.

The content of the magnesium source powder in the starting material mixture is preferably from 0.03 to 0.15, more preferably from 0.03 to 0.12 in terms of the molar ratio thereof to the total amount of the aluminum source powder and the titanium source powder (MgO-equivalent molar amount/ ($Al_2O_3$-equivalent molar amount + $TiO_2$-equivalent molar amount). By controlling the content of the magnesium source powder so as to fall within the range, the thermal decomposition resistance of the aluminum titanate-based fired body can be enhanced more.

The starting material mixture may further contain a silicon source powder. The silicon source powder is a powder of a material to be contained in the aluminum titanate-based fired body as a silicon component, and the combination use of the silicon source powder makes it possible to produce an aluminum titanate-based fired body having further enhanced thermal decomposition resistance. The silicon source powder includes, for example, a powder of silicon oxide (silica) such as silicon dioxide, and silicon monoxide.

The silicon source powder may also be a powder of a material capable of being led to silica by firing in air. The material includes, for example, silicic acid, silicon carbide, silicon nitride, silicon sulfide, silicon tetrachloride, silicon acetate, sodium silicate, sodium orthosilicate, feldspar, and a glass frit. Above all, a feldspar, a glass frit and the like are preferably used. From the viewpoint of easiness of industrial availability and stable composition, glass frit and the like are more preferably used. A glass frit is glass in flaky or powder form to be obtained by pulverizing glass.

When a glass frit is used, a glass frit having a yield point of 700°C or higher is preferably used from the viewpoint of further enhancing the thermal decomposition resistance of the aluminum titanate-based fired body to be obtained. In the invention, the yield point of glass frit may be measured, using a thermomechanical analysis (TMA). The yield point of glass frit is defined as a temperature (°C) at which expansion stops and then shrinkage starts in a heating process of a glass frit.

As the glass constituting the glass frit, usable is ordinary silicate glass comprising silicic acid [$SiO_2$] as the main ingredient (when the ingredient is more than 50% by mass of all the constitutive ingredients). The glass to constitute the glass frit may contain alumina [$Al_2O_3$], sodium oxide [$Na_2O$], potassium oxide [$K_2O$], calcium oxide [$CaO$], magnesia [$MgO$] and the like as the constitutive ingredients other than silicic acid, like ordinary silicate glass. The glass to constitute the glass frit may contain $ZrO_2$ for enhancing the hot water resistance of the glass itself.

The particle diameter of the silicon source powder is not specifically limited, and in general, a silicon source powder having D50 (50% corresponding particle diameter) within a range of from 0.5 $\mu$m to 30 $\mu$m is used. For more enhancing the packing capability of the shaped body of the starting material mixture, a silicon source powder having D50 within a range of from 1 $\mu$m to 20 $\mu$m is more preferably used.

When the starting material mixture contains a silicon source powder, the ratio of the $SiO_2$-equivalent molar amount of the silicon source powder to the total of the $Al_2O_3$-equivalent molar amount of the aluminum source powder and the $TiO_2$-equivalent molar amount of the titanium source powder in the starting material mixture is preferably from about 0.0011 to 0.123, more preferably 0.073 or less. The silicon source powder may contain minor components inevitably contained in the production process.

In the invention, a material comprising two or more metal elements selected from titanium, aluminum, silicon and magnesium as the constitutive ingredients, like a composite oxide such as the above-mentioned magnesia spinel ($MgAl_2O_4$), can also be used as the starting material powder. The material may be considered equivalent to the starting material mixture prepared by mixing the respective metal source materials. Based on this consideration, the content of the aluminum source material, the titanium source material, the magnesium source material and the silicon source material in the starting material mixture is controlled to fall within the above-mentioned range.

The starting material mixture may contain aluminum titanate or aluminum magnesium titanate itself, and for example, when aluminum magnesium titanate is used as the constitutive ingredient in the starting material mixture, the aluminum magnesium titanate is a starting material that serves as a titanium source, an aluminum source and a magnesium source.

In the invention, the starting material mixture containing an aluminum source powder, a titanium source powder and a magnesium source powder and optionally a silicon source powder as above is shaped into a shaped body, and then the shaped body is fired to give an aluminum titanate-based fired body. Firing after shaping can reduce shrinkage during firing, as compared with a case where the starting material mixture is directly fired. Accordingly, the aluminum titanate-based fired body to be obtained can be more effectively prevented from being cracked, and in addition, an aluminum titanate-based fired body, in which the porous form of the porous aluminum titanate crystal formed by firing is kept, can be obtained. The form of the shaped body is not specifically limited, and for example, the form includes a honeycomb form, a rod form, a tubular form, a tabular form, and a crucible form.

The shaping machine for use in shaping the starting material mixture includes a uniaxial press, an extruder, a tabletting machine, and a granulator. In extrusion shaping, the starting material mixture can be shaped after additives such as a pore-forming agent, a binder, a lubricant, a plasticizer, a dispersant and a solvent are added thereto.

The pore-forming agent includes carbon materials such as graphite; resins such as polyethylene, polypropylene, and polymethyl methacrylate; vegetable materials such as starch, nutshell, walnut shell, and corn; ice, dry ice. The amount of the pore-forming agent to be added may be generally from 0 to 40 parts by mass, and preferably from 0 to 25 parts by mass, relative to 100 parts by mass of the total of the aluminum source powder, the titanium source powder, the magnesium source powder and the silicon source powder (hereinafter simply referred to as "base total amount").

The binder includes celluloses such as methyl cellulose, carboxymethyl cellulose, and sodium carboxymethyl cellulose; alcohols such as polyvinyl alcohol; salts such as lignin sulfonate salt; waxes such as paraffin wax, and microcrystalline wax; thermoplastic resins such as EVA, polyethylene, polystyrene, liquid-crystalline polymer, and engineering plastics. The amount of the binder to be added may be generally not smaller than 2 parts by mass and not greater than 20 parts by mass, preferably not smaller than 5 parts by mass and not greater than 15 parts by mass relative to 100 parts by mass of the base total amount.

The lubricant and the plasticizer include alcohols such as glycerin; higher fatty acids such as caprylic acid, lauric acid, palmitic acid, alaginic acid, oleic acid, and stearic acid; metal stearates such as aluminum stearate. The amount of the lubricant and the plasticizer to be added may be generally from 0 to 10 parts by mass, and preferably from 0.5 to 5 parts by mass, and more preferably from 1 to 5 parts by mass relative to 100 parts by mass of the base total amount.

The dispersant includes, for example, inorganic acids such as nitric acid, hydrochloric acid, and sulfuric acid; organic acids such as oxalic acid, citric acid, acetic acid, malic acid, and lactic acid; alcohols such as methanol, ethanol, propanol; surfactants such as ammonium polycarboxylate, and polyoxyalkylene alkyl ether. The amount of the dispersant to be added may be generally from 0 to 20 parts by mass, and preferably from 2 to 8 parts by mass relative to 100 parts by mass of the base total amount.

The solvent includes, for example, monoalcohols such as methanol, ethanol, butanol, and propanol; dialcohols such as propylene glycol, polypropylene glycol, and ethylene glycol; and water. Above all, water is preferred; and ion-exchanged water is more preferred from the viewpoint of less impurities. The amount of the solvent to be used may be generally from 10 parts by mass to 100 parts by mass, and preferably from 20 parts by mass to 80 parts by mass relative to 100 parts by mass of the base total amount.

The starting material mixture to be shaped may be prepared by mixing (kneading) an aluminum source powder, a titanium source powder, a magnesium source powder and optionally a silicon source powder and the above-mentioned various additives as above.

The firing temperature in firing the shaped body may be generally 1300°C or higher, and preferably 1400°C or higher. The firing temperature may be generally 1650°C or lower, and preferably 1550°C or lower. The heating rate up to the firing temperature is not specifically limited, and in general, the rate may be from 1°C/hour to 500°C/hour. When a silicon source powder is used, a step of keeping the mixture at a temperature range of from 1100 to 1300°C for 3 hours or more (diffusing step) is preferably provided before the firing step. Accordingly, melting and diffusion of the silicon source powder may be promoted. When the starting material mixture contains a combustible organic matter such as a binder, the firing step includes a degreasing step of removing the matter. The degreasing is carried out typically in the heating stage up to the firing temperature (for example, in a temperature range of from 150 to 400°C). In the degreasing step, the heating rate is preferably lowered as much as possible, and is preferably from 5°C/hour to 60°C/hour.

The firing may be carried out generally in air, and the firing may also be carried out in an inert gas such as nitrogen gas and argon gas; or in a reducing gas such as carbon monoxide gas and hydrogen gas, depending on the type and the blend ratio of the starting material powders to be used, that is, the aluminum source powder, the titanium source powder, the magnesium source powder and the silica source powder. The firing may be carried out in an atmosphere where a vapor partial pressure is reduced.

In general, the firing is carried out using an ordinary firing furnace, such as a tubular electric furnace, a boxy electric furnace, a tunnel furnace, a far-IR furnace, a microwave heating furnace, a shaft furnace, a reverberating furnace, a rotary furnace, and a roller hearth furnace. The firing may be carried out by batch process or by continuous process, and may be carried out in a static mode or a fluidized mode.

The time to be taken for the firing may be a time enough for transition of the shaped body of the starting material mixture into an aluminum titanate-based crystal, and may be generally from 10 minutes to 24 hours depending on the amount of the starting material mixture, the type of the firing furnace, the firing temperature, the firing atmosphere and others.

In the manner as above, the intended aluminum titanate-based fired body can be obtained. The aluminum titanate-based fired body is excellent in thermal decomposition resistance, as mentioned above. Preferably, the aluminum titanate-based fired body is excellent also in bending strength and depressed thermal expansion. The aluminum titanate-based fired body has a form which almost maintais the form of the shaped body just after shaping. The obtained aluminum titanate-based fired body may be processed into a desired form by cutting or the like.

The aluminum titanate-based fired body obtained by the process of the invention may include a crystal pattern of aluminum magnesium titanate, and other crystal patterns of alumina, titania and the like in the X-ray diffraction spectrum thereof. The aluminum titanate-based fired body obtained by the process of the invention may be represented by a compositional formula: $Al_{2(1-x)}Mg_xTi_{(1+x)}O_5$ with ignoring the substitution with silicon, wherein the value x is 0.03 or more, preferably from 0.03 to 0.15, and more preferably from 0.03 to 0.12.

[Examples]

The invention is described in detail with reference to the following Examples, but the invention should not be restricted by these Examples. In the following Examples and Comparative Examples, the firing shrinkage ratio of the shaped body of the starting material mixture, the aluminum titanate conversion ratio (AT conversion ratio) of the aluminum titanate-based fired body, the thermal decomposition resistance ratio, the three-point bending strength, the coefficient of thermal expansion, the pore diameter, the porosity of open pores, and the particle diameter distribution of the starting material powder to be used were determined by the methods mentioned below.

(1) Firing Shrinkage Ratio

The length (pitch length between cell walls) of the honeycomb shaped body before firing (after extrusion shaping) and that of the shaped body after firing were measured at 5 points respectively, in the extrusion cross-section direction (cross section of the shaped body perpendicular to the extrusion direction), and the data were averaged to give the mean length before firing and the mean length after firing. From the data, the firing shrinkage ratio was calculated by the following formula:

$$\text{Firing Shrinkage Ratio}(\%) = \{1 - (\text{mean length after firing}) / (\text{mean length before firing})\} \times 100.$$

(2) AT Conversion Ratio

The aluminum titanate conversion ratio (AT conversion ratio) was calculated by the following formula. In the formula, $I_T$ indicates the integrated intensity of the peak [assigned to the titania-rutile phase (110) face] appearing at the position of $2\theta=27.4°$ in a powdery X-ray diffraction spectrum, and $I_{AT}$ indicates the integrated intensity of the peak [assigned to the aluminum magnesium titanate phase (230) face] appearing at the position of $2\theta = 33.7°$.

$$\text{AT Conversion Ratio} = I_{AT}/(I_T + I_{AT}) \times 100 \ (\%).$$

(3) Thermal Decomposition Resistance Ratio

From the aluminum titanate-based fired body obtained, a test piece of about 4 mm × about 4 mm × about 50 mm was cut out. Next, the test piece was subjected to heat treatment comprising heating up to 1100°C at a heating rate of 300°C/hr, then keeping at the temperature for 48 hours, and thereafter cooling to room temperature at a cooling rate of 300°C/hr. The AT conversion ratio $R_0$ (%) before the heat treatment and the AT conversion ratio R (%) after the heat treatment were determined by the above-mentioned method, and the thermal decomposition resistance ratio was obtained as the reduction ratio of the aluminum magnesium titanate crystal in the fired body after the heat treatment, by the following formula:

$$\text{Thermal Decomposition Resistance Ratio} (\%) = (1 - R/R_0) \times 100.$$

(4) Three-Point Bending Strength

A rectangular piece having a length of about 50 mm, a width of about 5 mm and a thickness of about 5 mm was cut out of the aluminum titanate fired body, in the extrusion direction in extrusion shaping of the starting material mixture. The surface of the thus-cut, fired body was polished to be smooth with no roughness using a sandpaper (#1500). The three-point bending strength of the obtained sample was measured by the method according to JIS R 1601.

(5) Coefficient of Thermal Expansion

A test piece of about 4 mm × about 4 mm × about 10 mm was cut out of the aluminum titanate-based fired body. Next, the test piece was subjected to heat treatment comprising heating up to 1000°C at a heating rate of 200°C/hr and then immediately cooling to room temperature (25°C). Using a thermomechanical analyzer (SII Technology's TMA6300), the heat-treated test piece was heated from 25°C up to 1000°C at 600°C/hr, and from the expansion ratio of the test piece, the coefficient of thermal expansion [K$^{-1}$] was calculated by the following formula:

$$\text{Coefficient of Thermal Expansion } [K^{-1}] = \text{expansion ratio of}$$

$$\text{test piece}/975 \text{ } [K].$$

In this formula, the expansion ratio of the test piece means (volume of the test piece when heated up to 1000°C - volume of the test piece before heating (25°C)) / (volume of the test piece before heating (25°C)).

(6) Pore diameter

The fired body (0.4g) was pulverized, and the resulting small piece of about 2 mm cubic was dried in air at 120°C for 4 hours, using an electric furnace, and then the pore radius was measured within a measurement range of from 0.001 to 100.0 $\mu$m by a mercury intrusion method, and the pore radius indicating the maximum frequency was determined. The pore radius was doubled to give a pore diameter (mode diameter). As the measuring device, Micromeritics' "Autopore III9420" was used.

(7) Porosity

By an Archimedes method of dipping samples in water according to JIS R1634, the weight in water M2 (g), the water-saturated water M3 (g) and the dry weight M1 (g) of the fired body were measured, and the porosity was calculated by the following formula:

$$\text{Porosity (\%) = 100} \times \text{(M3 - M1) / (M3 - M2).}$$

(8) Particle Diameter Distribution of Starting Material Powder

The particle diameter distribution and D50 (50% corresponding particle diameter) of the starting material powder were measured, using a laser diffractiometric particle diameter measuring apparatus (Nikkiso's Microtrac HRA (X-100)".

<Example 1>

As the starting material powders, the following were used. "Percentage (%) by mass" of each starting material powder is the value relative to 100 % by mass of the total of the starting material powders (aluminum source powder, titanium source powder, magnesium source powder and silicon source powder). The blend ratio of the starting material powders mentioned below was, in terms of the alumina [Al$_2$O$_3$]-equivalent, titania [TiO$_2$]-equivalent, magnesia [MgO]-equivalent and silica [SiO$_2$]-equivalent molar ratio thereof, [Al$_2$O$_3$]/[TiO$_2$]/[MgO]/[SiO$_2$] = 34.3%/50.2%/9.4%/6.1%.

(1) Aluminum source powder

Aluminum oxide powder ($\alpha$-alumina powder) having D50 of 33 $\mu$m: 28 % by mass

(2) Titanium source powder

Titanium oxide A (rutile-form crystal) having a particle diameter distribution shown in Table 1 and Fig. 1 mentioned below and having D50 of 1.8 $\mu$m: 48 % by mass

(3) Magnesium source powder

Magnesia spinel powder having D50 of 5.5 $\mu$m: 18% by mass

(4) Silicon source powder

Glass frit (Takara Standard's "CK0832") having D50 of 8.5 $\mu$m : 6% by mass

To the mixture of the above aluminum source powder, titanium source powder, magnesium source powder and silicon source powder, added were methyl cellulose as a binder in an amount of 7.5 parts by mass, polyoxyalkylene alkyl ether as a surfactant in an amount of 9.3 parts by mass, and glycerin as a lubricant in an amount of 0.8 parts by mass, and further water as a dispersant in an amount of 38 parts by mass relative to 100 parts by mass of the mixture, and then they were kneaded with a kneader to prepare a mixture (starting material mixture for shaping). Next, the mixture was shaped by extrusion to produce a honeycomb shaped body. In an air atmosphere, the obtained shaped body was fired in a process in which a heating step also serves as a pre-firing (degreasing) to remove the binder, and a honeycomb porous fired body (honeycomb structure) was obtained. The highest temperature in firing was 1450°C, and the keeping time at the highest temperature was 5 hours.

The obtained porous fired body was pulverized in a mortar, and the resulting powder was analyzed through powdery X-ray diffractiometry to give the diffraction spectrum thereof. The powder had a crystal peak of aluminum magnesium titanate. The AT conversion ratio of the powder was 100 %. Table 2 shows the firing shrinkage ratio of the honeycomb shaped body, and the AT conversion ratio, the thermal decomposition resistance ratio, the three-point bending strength, the coefficient of thermal expansion, the pore diameter and the porosity of open pores of the obtained aluminum titanate-based fired body.

<Comparative Example 1>

A honeycomb porous fired body was obtained in the same manner as in Example 1 except that, the starting material powders and additive mentioned below were used. "Percentage (%) by mass" of each starting material powder and additive is the value relative to 100 % by mass of the total of the starting material powders (aluminum source powder, titanium source powder, magnesium source powder and silicon source powder) and the additive. The blend ratio of the starting material powders mentioned below was, in terms of the alumina $[Al_2O_3]$-equivalent, titania $[TiO_2]$-equivalent, magnesia $[MgO]$-equivalent and silica $[SiO_2]$-equivalent molar ratio thereof like in Example 1, $[Al_2O_3]/[TiO_2]/[MgO]/[SiO_2]$ = 34.3%/50.2%/9.4%/6.1%.

(1) Aluminum source powder

Aluminum oxide powder ($\alpha$-alumina powder) having D50 of 33 $\mu$m: 24 % by mass
Aluminum hydroxide powder having D50 of 1.0 $\mu$m: 1.5 % by mass

(2) Titanium source powder:

Titanium oxide B (rutile-form crystal) having a particle diameter distribution shown in Table 1 and Fig. 1 mentioned below and having D50 of 14.2 $\mu$m: 43 % by mass (3) Magnesium source powder:

Magnesia spinel powder having D50 of 5.5 $\mu$m: 16% by mass (4) Silicon source powder
Glass frit (Takara Standard's "CK0832") having D50 of 8.5 $\mu$m: 5.5% by mass

(5) Pore-Forming Agent:

Polyethylene powder having D50 of 23 $\mu$m: 10 % by mass

The obtained porous fired body was pulverized in a mortar, and the resulting powder was analyzed through powdery X-ray diffractiometry to give the diffraction spectrum. The powder had a crystal peak of aluminum magnesium titanate. The AT conversion ratio of the powder was 100 %. Table 2 shows the firing shrinkage ratio of the honeycomb shaped body, and the AT conversion ratio, the thermal decomposition resistance ratio, the coefficient of thermal expansion, the pore diameter and the porosity of open pores of the obtained aluminum titanate-based fired body. In preparing a sample for three-point bending strength measurement from the obtained porous fired body, the fired body was broken in the step of polishing the outer surface thereof, and therefore, the three-point bending strength could not be measured (In Table 2, this is shown as "-").

<Comparative Example 2>

A honeycomb porous fired body was obtained in the same manner as in Example 1 except that, the starting material powders mentioned below were used. Like in Example 1, the blend ratio of the starting material powders mentioned below was, in terms of the alumina [$Al_2O_3$]-equivalent, titania [$TiO_2$]-equivalent, magnesia [MgO]-equivalent and silica [$SiO_2$]-equivalent molar ratio thereof, [$Al_2O_3$]/[$TiO_2$]/[MgO]/[$SiO_2$]= 34.3%/50.2%/9.4%/6.1%.

(1) Aluminum source powder

Aluminum oxide powder (α-alumina powder) having D50 of 33 μm: 28 % by mass

(2) Titanium source powder

Titanium oxide C (rutile-form crystal) having a particle diameter distribution shown in Table 1 and Fig. 1 mentioned below and having D50 of 34.4 μm: 48 % by mass

(3) Magnesium source powder

Magnesia spinel powder having D50 of 3.5 μm: 18% by mass

(4) Silicon source powder

Glass frit (Takara Standard's "CK0832") having D50 of 8.5 μm: 6% by mass

The obtained porous fired body was pulverized in a mortar, and the resulting powder was analyzed through powdery X-ray diffractiometry to give the diffraction spectrum thereof. The powder had a crystal peak of aluminum magnesium titanate. The AT conversion ratio of the powder was 100 %. Table 2 shows the firing shrinkage ratio of the honeycomb shaped body, and the AT conversion ratio, the thermal decomposition resistance ratio, the three-point bending strength, the coefficient of thermal expansion, the pore diameter and the porosity of open pores of the obtained aluminum titanate-based fired body.

[Table 1]

| Titanium Oxide | D50 (μm) | Frequency (%) in each particle diameter range (μm) | | | | |
|---|---|---|---|---|---|---|
| | | 0.1~0.50 | 5~3 | 3~15 | 15~75 | 75 or more |
| A | 1.8 | 7.7 | 50.8 | 7.9 | 30.2 | 3.3 |
| B | 14.2 | 4.3 | 27.4 | 20.3 | 46.8 | 1.1 |
| C | 34.4 | 0.0 | 0.5 | 7.5 | 89.5 | 2.5 |

[Table 2]

| | Firing Shrinkage Ratio (%) | AT Conversion Ratio (%) | Thermal Decomposition resistance (%) | Three-point Bending Strength (MPa) | Coefficient of Thermal Expansion (x$10^{-6}K^{-1}$) | Pore Diameter (μm) | Porosity of open pores (%) |
|---|---|---|---|---|---|---|---|
| Example 1 | 9.8 | 100 | 0 | 3.7 | 0.8 | 11 | 39 |
| Comparative Example 1 | 15 | 100 | 0 | - | 2.1 | 13 | 50 |
| Comparative Example 2 | 13 | 100 | 0 | 2.8 | 1.1 | 16 | 40 |

The mode and Examples for carrying out the invention disclosed at this time are exemplification in all aspects, and those should be considered unlimitedly. The scope of the invention is indicated by the claims, not by the above-mentioned description, and is intended to comprise all variations in the meaning and in the range of claims-equivalent.

Industrial Applicability

The aluminum titanate-based fired body obtained in the invention can be used favorably, for example, for tools for firing furnaces such as crucibles, setters, saggers, refractories; exhaust gas filters and catalyst carriers for use for exhaust gas purification in internal combustion engines such as diesel engines, and gasoline engines; ceramic filters for use for filtration filters for edibles such as beer, and selective permeation filters for selectively permeating gas components formed in oil purification, such as carbon monoxide, carbon dioxide, nitrogen, oxygen; electronic parts such as substrates, and capacitors. Above all, when used for ceramic filters and the like, the aluminum titanate-based fired body of the invention can maintain a good filtering capability for a long period of time, because the fired body is excellent in thermal decomposition resistance.

**Claims**

1.  A process for producing an aluminum titanate-based fired body, comprising a step of firing a shaped body made of a starting material mixture containing an aluminum source powder, a titanium source powder, and a magnesium source powder, wherein the titanium source powder has a volume-based particle diameter distribution which is measured by a laser diffraction method and which satisfies the following formulas (1) and (2):

$$(V_{0.5-3} + V_{15-75})/V_{total} \geq 0.7 \qquad (1)$$

$$1/2 \leq V_{15-75}/V_{0.5-3} \leq 3/2 \qquad (2)$$

   wherein $V_{0.5-3}$ is a cumulative frequency of particles having a particle diameter of from 0.5 $\mu$m to 3 $\mu$m, $V_{15-75}$ is a cumulative frequency of particles having a particle diameter of from 15 $\mu$m to 75 $\mu$m, and $V_{total}$ is a cumulative frequency of particles having a particle diameter of 0.1 $\mu$m or greater.

2.  The process according to claim 1, wherein in the starting material mixture a ratio of an $Al_2O_3$-equivalent molar amount of the aluminum source powder to a $TiO_2$-equivalent molar amount of the titanium source powder is from 35: 65 to 45: 55, and a ratio of a MgO-equivalent molar amount of the magnesium source powder to a total of an $Al_2O_3$-equivalent molar amount of the aluminum source powder and a $TiO_2$-equivalent molar amount of the titanium source powder is from 0.03 to 0.15.

3.  The process according to claim 1 or 2, wherein a particle diameter corresponding to a cumulative percentage of 50% based on a volume of the aluminum source powder is from 10 $\mu$m to 50 $\mu$m.

4.  The process according to any one of claims 1 to 3, wherein a particle diameter corresponding to a cumulative percentage of 50% based on a volume of the magnesium source powder is from 0.5 $\mu$m to 30 $\mu$m.

5.  The process according to any one of claims 1 to 4, wherein the starting material mixture further contains a silicon source powder.

6.  The process according to claim 5, wherein the silicon source powder is a feldspar, a glass frit, or a mixture thereof.

7.  The process according to claim 5 or 6, wherein a ratio of a $SiO_2$-equivalent molar amount of the silicon source powder to a total of an $Al_2O_3$-equivalent molar amount of the aluminum source powder and a $TiO_2$-equivalent molar amount of the titanium source powder is from 0.0011 to 0.123.

8.  The process according to any one of claims 5 to 7, wherein a particle diameter corresponding to a cumulative percentage of 50% based on a volume of the silicon source powder is from 0.5 $\mu$m to 30 $\mu$m.

9. The process according to any one of claims 1 to 8, wherein the body has a honeycomb shape.

10. The process according to any one of claims 1 to 9, wherein the firing is carried out at a temperature of from 1300 °C to 1650 °C for a time of from 10 minutes to 24 hours.

Fig. 1

<table>
<tr><td colspan="2"><div align="center"><strong>INTERNATIONAL SEARCH REPORT</strong></div></td><td>International application No.<br>PCT/JP2009/070740</td></tr>
</table>

**A. CLASSIFICATION OF SUBJECT MATTER**
*C04B35/46*(2006.01)i, *B01D39/20*(2006.01)n

According to International Patent Classification (IPC) or to both national classification and IPC

**B. FIELDS SEARCHED**

Minimum documentation searched (classification system followed by classification symbols)
C04B35/46

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2008/078747 A1 (Hitachi Metals, Ltd.),<br>03 July 2008 (03.07.2008),<br>claims 1, 2, 6; paragraphs [0033], [0037] to<br>[0039]; table 3; fig. 1<br>& EP 2098493 A | 1-3,5-7,9,10<br>4,8 |

☐ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>14 January, 2010 (14.01.10) | Date of mailing of the international search report<br>26 January, 2010 (26.01.10) |
|---|---|
| Name and mailing address of the ISA/<br>Japanese Patent Office | Authorized officer |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 05105704 A
- WO 08078747 A